(19) **Europäisches Patentamt**
**European Patent Office**
**Office européen des brevets**

(11) **EP 4 530 963 A1**

(12) **EUROPEAN PATENT APPLICATION**

(43) Date of publication:
**02.04.2025 Bulletin 2025/14**

(21) Application number: **23200912.6**

(22) Date of filing: **29.09.2023**

(51) International Patent Classification (IPC):
***G06Q 50/06*** (2024.01)  ***H04L 67/12*** (2022.01)

(52) Cooperative Patent Classification (CPC):
**G06Q 50/06; H04L 67/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **RAMANATH, Vinay
560070 Bengaluru, Karnataka (IN)**
• **B R, Chethan Ravi
577134 Chickmagalur District, Karnataka (IN)**

• **SINGAM, Srividhya
518360 Kurnool District, Andhra Pradesh (IN)**
• **CHAITANYA, O.V.R.Krishna
560067 Bangalore, Karnataka (IN)**
• **MITRA, Sayantan
700094 Kolkata, West Bengal (IN)**
• **GAONKAR, Pradnya
560100 Bangalore, Karnataka (IN)**
• **PRAHARAJ, Ayush
751014 Bhubaneswar, Orissa (IN)**

(74) Representative: **Horn Kleimann Waitzhofer
Schmid-Dreyer
Patent- und Rechtsanwälte PartG mbB
Theresienhöhe 12
80339 München (DE)**

(54) **SYSTEM AND METHOD FOR OPTIMIZING CARBON FOOTPRINT ASSOCIATED WITH SOFTWARE APPLICATIONS**

(57)    A computer system and method for optimizing carbon footprint associated with a software application is disclosed. The method comprises detecting, by a processor (104) an event associated with a software application. The event is indicative of a need for optimizing carbon footprint associated with a task to be performed on the software application. Further, a set of control parameters affecting the carbon footprint and a performance metric associated with the software application are identified. The set of control parameters identified, is further optimized using a predetermined solver. The optimized set of control parameters correspond to optimized carbon footprint associated with the software ap- plication. Furthermore, a notification indicative of an outcome of optimizing the set of control parameters is generated on a display device (114).

FIG 1

100

EP 4 530 963 A1

**Description**

TECHNICAL FIELD

The present invention relates to software sustainability, and in particular relates to a system and method for optimizing carbon footprint associated with software applications.

BACKGROUND

At present, there exists several carbon footprint measurement applications mainly for Artificial Intelligence/-Machine Learning applications. Such measurement applications measure energy consumption associated with a single type of compute hardware unit such as a Central Processing Unit (CPU) or a General Processing Unit (GPU), at a specific instant of time. In other words, if there are two compute units, energy loss from one compute unit while the other compute unit is being actively probed for energy consumption, is not accounted for. Further, there is no way to predict carbon footprint prior to use of the software application for a specific purpose such as simulation.

In existing art, sustainability of a software application or related technology elements is measured in terms of performance metrics such as response time, reliability & adaptability. However, if sustainability of a software application is to be improved, the performance may be compromised. In other words, there is a lack of a mechanism that can provide an optimal balance between performance and sustainability of software applications. To create such an optimal balance, it is also necessary to firstly identify parameters that affect both the performance and the sustainability.

In light of the above, there exists a need for a better mechanism for improving sustainability associated with software application.

SUMMARY

Variously disclosed embodiments comprise methods and computer systems that may be used to optimize carbon footprint associated with a software application.

According to a first aspect of the invention, a computer-implemented method optimizing carbon footprint associated with a software application is disclosed. The method includes detecting an event associated with a software application, wherein the event is indicative of a need for optimizing carbon footprint associated with a task to be performed on the software application. In an embodiment, detecting the event associated with the software ap-plication includes receiving a request from a source, for optimizing the carbon footprint associated with the task. In another embodiment, detecting the event associated with the software application includes determining that at least one of an estimated carbon footprint and a performance metric associated with the task fails to meet a predefined constraint. In a further embodiment, the estimated carbon footprint is at least one of an actual carbon footprint value and a predicted carbon footprint value associated with the task.

In an embodiment, the actual carbon footprint value is estimated by measuring instantaneous energy consumption associated with the software application, by using a utility software. Further, the actual carbon footprint value associated with the software application is computed based on values of the instantaneous energy consumption measured by the utility software over a predefined time interval.

In an embodiment, the predicted carbon footprint value is estimated by comparing the task to one or more previously com-pleted tasks performed by the software application, based on the set of control parameters, wherein carbon footprints associated with the previously completed tasks are readily available. Further, it is determined that at least one previously completed task is similar to the task. The carbon footprint associated with the task is further predicted based on the previously completed task. In an embodiment, the carbon footprint and the performance metric associated with the task is computed from the previously completed task using transfer learning method. In another embodiment, the carbon footprint and the performance metric associated with the task is computed from at least two of the previously completed tasks using multi-point interpolation.

The method further includes identifying a set of control parameters affecting the carbon footprint and the performance metric associated with the software application. In an embodiment, identifying the set of control parameters affecting the carbon footprint associated with the software application includes, analyzing a superset of control parameters associated with the task to be performed by the software application, to compute rankings associated with each control parameter in the set of control parameters. Further, the set of control parameters is selected from the superset of control parameters based on the rankings of the control parameters.

The method further includes optimizing the set of control parameters identified, using a predetermined solver, wherein the optimized set of control parameters correspond to optimized carbon footprint associated with the software application. In an embodiment, optimizing the set of control parameters using the predetermined solver includes, generating a control parameter database based on the identified set of control parameters, wherein the control parameter database comprises a Design of Experiments associated with the control parameters and corresponding values of carbon footprint and performance metric for the software application. Further, one or more objective functions are determined based on the determined control parameter database, wherein the one or more objective functions is associated with at least one performance constraint and at least one sustainability constraint for the task. Further, at least one set of optimized control parameters is computed based on the generated objective functions using the solver.

The method further includes generating a notification indicative of an outcome of optimizing the set of control parameters on a display device. In an embodiment of the present invention, the method may further include, reconfiguring the software application based on the at least one set of optimized control parameters.

According to a second aspect of the invention, a computer system may be arranged and configured to execute the steps of the computer-implemented method according to the first aspect of the invention.

According to a third aspect of the invention, a computer program product may comprise computer program code which, when executed by the computer system according to the second aspect of the invention, causes the computer system to carry out the method according to the first aspect of the invention.

According to a fourth aspect of the invention, a computer-readable medium may comprise the computer program product according to the third aspect of the invention. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure.

Also, before undertaking the detailed description below, various definitions for certain words and phrases are provided throughout this patent document and those of ordinary skill in the art will understand that such definitions apply in many, if not most, instances to prior as well as future uses of such defined words and phrases. While some terms may comprise a wide variety of embodiments, the appended claims may expressly limit these terms to specific embodiments.

BRIEF DESCRIPTION OF FIGURES

FIG 1 illustrates a functional block diagram of an example computer system or data processing system that facilitates optimization of carbon footprint associated with software applications, in accordance with an embodiment of the present invention;

FIG 2 shows a flowchart of a method of measuring carbon footprint in accordance with an exemplary embodiment of the present invention;

FIG 3 shows a flowchart of a method of predicting carbon footprint from a software application, in accordance with an exemplary embodiment of the present invention;

FIG 4 shows an example of a Graphical User Interface showing a Pareto front comprising a trade-off curve for a specific simulation task, in accordance with an embodiment of the present invention;

FIG 5 shows a flowchart of a method of predicting car-bon footprint associated with a software application, in accordance with another exemplary embodiment of the pre-sent invention;

FIG 6 shows a flowchart of a method for optimizing carbon footprint associated with a software application, in accordance with an embodiment of the present invention; and

FIG 7 illustrates a block diagram of a data processing system, in accordance with an embodiment of the present invention.

DETAILED DESCRIPTION

Various technologies that pertain to systems and methods for optimizing carbon footprint associated with software applications will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

In the present document, an approach is suggested to optimize carbon footprint associated with software applications.

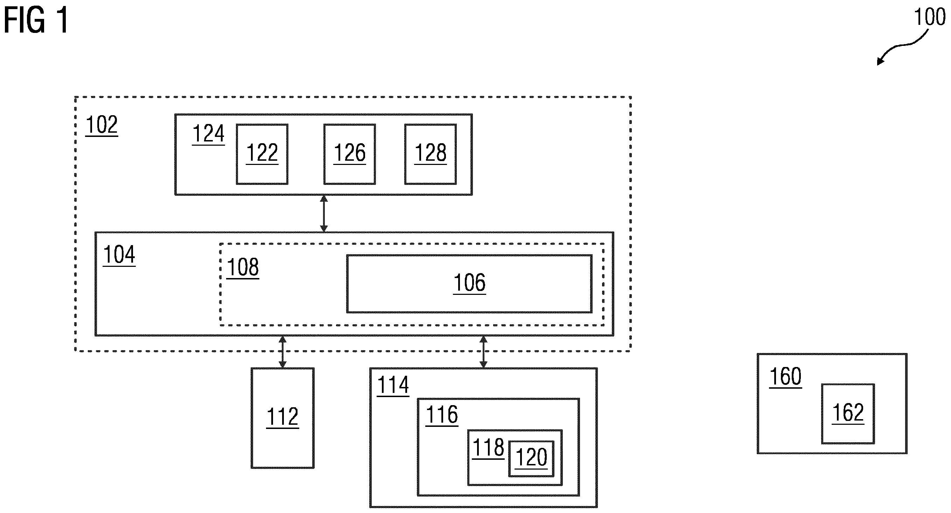

FIG 1 illustrates a functional block diagram of an example computer system or data processing system 100 that facilitates optimization of carbon footprint associated with software applications, in accordance with an embodiment of the present invention.

The computer system 100 may include a sustainability management platform 102 including at least one processor 104 that is configured to execute at least one sustainability management module 106 from a memory 108 accessed by the processor 104. Herein, the sustainability management platform 102 may include functionalities of detecting an event associated with a software application, identifying a set of control parameters affecting the carbon footprint and the performance metric associated with the software application, optimizing the set of control parameters identified, using a predetermined solver, and generating a notification indicative of an outcome of optimizing the set of control parameters on a display device. The sustainability management module 106 may be configured (i.e., programmed) to cause the processor 104 to carry out various acts and functions described herein. For example, the described sustainability management module 106 may include and/or correspond to one or more components of the sustainability management platform 102 that is configured to optimize carbon footprint associated with software applications.

By way of example, the sustainability management platform 102 may be cloud-based, internet-based and/or be operated by a provider providing solutions for optimizing carbon footprint associated with software applications. The user may be located close to the sustainability management platform 102 or remote to the sustainability management platform 102, e.g., using a workstation for connecting to the sustainability management platform 102, e.g., via the internet, wherein the workstation may include an input device 112 and a display device 114. In some examples, the sustainability management platform 102 may be installed and run on a user's device, such as a computer, laptop, pad, on-premise computing facility, or the like.

Examples of product systems that may be adapted to include the sustainability management features described herein may include simulation-based tools such as NX CAD, Simcenter 3D, Amesim, StarCCM, Tecnomatix etc. of Siemens. However, it should be appreciated that the systems and methods described herein may be used in other product systems (e.g., product lifecycle management (PLM), product data management (PDM)) and/or any other type of system that performs software tasks. In the present disclosure, the term "software task" and "task" may be used interchangeably, to refer to execution of set of software codes by a software application, to perform a specific function.

It should be appreciated the present invention helps in optimizing carbon footprint associated with resource-intensive simulation and digital twin-based software applications, based on events indicative of a need for optimizing carbon footprint associated with a simulation task to be performed on the respective software application.

To enable the optimization of carbon footprint associated with software applications, the described product system or computer system 100 may include the at least one input device 112 and the at least one display device 114 (such as a display screen).

The described processor 104 may be configured to generate a graphical user interface (GUI) 116 through the display device 114. Such a GUI 116 may include GUI elements such as buttons, links, search boxes, lists, text boxes, images, scroll bars usable by a user to provide inputs through the input device 112 required to initiate a request for optimizing carbon footprint associated with a software application or to define control parameters associated with the optimization. By way of example, the GUI 116 may include a first UI 118 provided to a user for providing inputs necessary for optimization of the carbon footprint, for example, values of parameters that affect the carbon footprint, or other inputs that help in selecting an operating point. The operating point may be indicative of a set of control parameters corresponding to a specific value or range of either the carbon footprint or the performance metric. Further, a second UI 120 is provided within the first UI 118 for enabling the user to view an outcome of optimizing the carbon footprint. For example, the second UI 120 may display the real-time values of carbon footprint and the performance metric.

In an embodiment, the sustainability management module 106 and/or the processor 104 may be configured to detect an event associated with the software application. The event is indicative of a need for optimizing carbon footprint associated with a task to be performed on the software application. In an embodiment, detecting the event associated with the software application includes receiving a request from a source, for optimizing the carbon footprint associated with the task. For example, the source may include a user input received from an input device associated with the computer system.

In an embodiment, detecting the event associated with the software application includes determining that at least one of an estimated carbon footprint and a performance metric associated with the task fails to meet a predefined constraint. For example, the predefined constraint may be that the carbon footprint is lower than a predefined value. In another example, the predefined constraint may be associated with the performance metric being outside of a predefined range. In yet another example, the predefined constraint may be such that the performance metric may not be below a specified minimum value, and that the carbon footprint may not be above a maximum value specified.

In an embodiment, the estimated carbon footprint is one of an actual carbon footprint value and a predicted carbon footprint value. Herein, the actual carbon footprint value is measured during execution of the task, whereas the predicted carbon footprint value is carbon footprint predicted before execution of the task. In an embodiment, the actual carbon footprint is estimated by measuring instantaneous energy consumption associated with the software application, by using a utility software. Further, the actual carbon footprint value associated with the software application is estimated based on values of the instantaneous energy consumption measured by the utility software over a predefined time interval. The utility software is configured to measure the instantaneous energy consumption based on an Operating System (OS) on which the software application operates and number of compute units in a hardware on which the OS is installed. The number of compute units include, for example, number of CPU sockets and/or GPU cards present in the hardware. In an example, the utility software determines instantaneous energy consumption associated with an NVIDIA GPU card based on instantaneous power consumption reported for the GPU card by a corresponding NVIDIA Management library. The NVML is a C-based programmatic interface for monitoring and managing various states within NVIDIA GPUs. In another example, the utility software determines the instantaneous energy consumption associated with a CPU socket based on instantaneous power consumption reported Intel® Power Gadget on Windows OS or Running Average Power Limit (RAPL) interface on Linux OS. The Intel® Power Gadget is a software-based power usage monitoring tool enabled for Intel Core processors. The RAPL interface is a similar software-based power usage monitor adaptable for use with Linux OS.

In a preferred embodiment, a single type of compute unit is probed by the utility software to obtain the energy consumption data, at a given point of time although different compute units may be used simultaneously by the software. In particular, while one type of compute unit is probed for instantaneous power consumption data, the instantaneous power consumed by different compute unit(s) and measured at the previous time instant is assumed to be constant over the time period of instantaneous power measurement. The instantaneous power consumption multiplied by the time interval to measure the same gives the energy consumption over the time interval. In other words, the energy consumption data is accumulated over the execution time of the software application to determine the total energy consumption from the underlying compute unit(s), as indicated by the formula below:

$$E_{exec} = \sum \sum_{i=0}^{N} P_i \, dT_i \qquad\qquad (1)$$

where,

$E_{exec}$ is the energy consumption by the underlying hardware during execution of the software application, N is the total number of discrete time intervals over which the application under interest is probed for energy consumption, $P_i$ and $dT_i$ are the instantaneous power and length of time interval respectively at the $i^{th}$ time interval. Similarly, energy consumption '$E_{base}$' by the underlying hardware when the software application is not in use may be determined using base runs. In particular, during base runs, instantaneous energy consumption by the underlying hardware is measured when the software application is not being executed. Base runs are performed by firstly, determining runtimes of the software application. Further, start and finish times are enabled for the utility software based on the determined runtimes. This helps in segregating the base run time from the execution time of the software application. Further, a data log file associated with the utility software is processed to identify energy consumption during execution of the software application and during the base run.

The net energy consumption $E_{net}$ is further computed as subtracting the energy consumption by the compute units during base run from the energy consumption by the compute units during execution of the software application, i.e.,

$$E_{net} = E_{exec} - E_{base} \qquad\qquad (2)$$

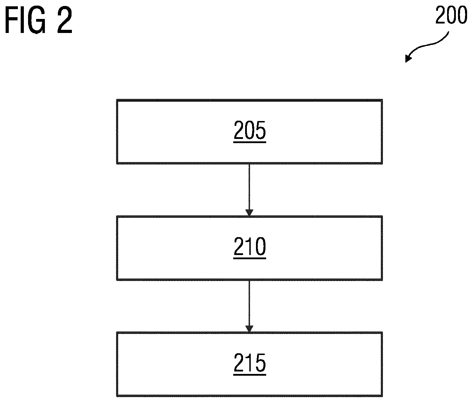

Further, the net energy consumption is multiplied by a predefined carbon coefficient or carbon intensity factor to estimate the carbon footprint solely from the application running on the underlying computer hardware. The carbon coefficient or carbon intensity factor may be predefined for an energy grid associated with a specific geographical region in which the hardware is located. An example of measuring carbon footprint from a software application is described in detail with reference to FIG 2.

In an embodiment, the predicted carbon footprint is estimated by comparing the task to be performed by the software application to one or more other tasks performed by the software application in the past. For example, if the software application is a simulation software such as SimCenter 3D, the prediction may involve comparing a first simulation task (hereinafter referred to as first task) initiated by a user on SimCenter 3D, with one or more second simulation tasks (hereinafter referred to as second tasks) completed earlier using SimCenter 3D. The comparison may be performed for example, based on DAT files or other similar files corresponding to each of the first task and the one or more second tasks. The DAT file may be parsed to extract parameters and corresponding values corresponding to each of the first task and the second task. In another example, the comparison may also be performed based on values of the parameters entered by the user manually via the graphical user interface 116. In case of tasks, the parameters correspond to the simulation model used in the task, hardware specification and user behavior, and use case corresponding to the task.

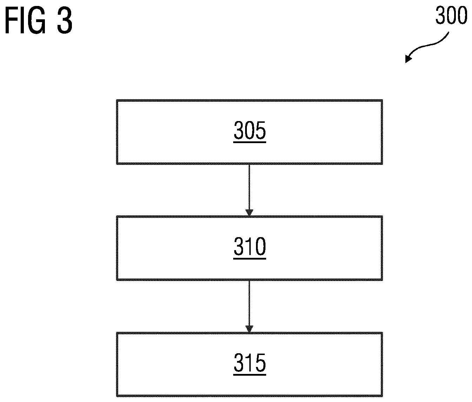

Non-limiting examples of parameters related to the simulation model include type of simulation model (thermal, structural, etc.), expertise level of user performing the task, type of analysis, initial conditions, boundary conditions, solver settings, number of nodes, mesh settings, scalability and reusability. Non-limiting examples of parameters related to the use case include complexity of the simulation model, contact conditions, material details, loads, expected results and maturity level of the simulation model (developed from scratch or reused). Non-limiting examples of parameters related to hardware include type of OS, RAM, make of the computer system, type of processing unit core, geographical location of the hardware, type of schedular, load balancing, type of processing unit (GPU, CPU, TPU etc.), energy efficiency, whether the software application is on-premise or cloud-based, cloud platform provider (AWS, Azure, Google etc.). Non-limiting examples of user behavior include choice of programming language used by the user, level of awareness (qualitative & quantitative), cost implications, hardware-software combination used, selection of source of energy (nuclear, wind, solar etc.) used for powering the hardware. It must be understood that the above-mentioned parameters may be implicitly determined from configuration settings associated with the computer system and/or software application or from DAT files associated with the software application, or explicitly provided by the user via the graphical user interface 116. An example of predicting carbon footprint from a software application is described in detail later, with reference to FIG 3.

In another embodiment, detecting the event associated with the software application includes receiving a request from a source, for optimizing the carbon footprint associated with the task. For example, the source may be an input device. For example, a user's intent may be identified based on inputs provided by the user via the graphical user interface 116 associated with the computer system. The graphical user interface 116 may be associated with the utility application that enable the user to firstly select the software application from a set of software applications installed on the computer system. Further, the user may initiate measurement or prediction of carbon footprint from the software application. For example, the user may click on a 'Measure' or 'Predict' tab provided on the graphical user interface 116. Further, based on the measurement or prediction, carbon footprint associated with the software application is estimated. Further, the user may select an 'Optimize' tab on the graphical user interface 116, to allow the utility application to perform functions related to reducing the carbon footprint corresponding to the software application. The selection of the "Optimize" tab may act as the user request to the computer system.

The sustainability management module 106 and/or the processor 104 is further configured for identifying a set of control parameters affecting the carbon footprint associated with the software application. In an embodiment, identifying the set of control parameters affecting the carbon footprint associated with the software application includes analyzing a superset of control parameters associated with a task to be performed by the software application, to compute rankings associated with each control parameter in the superset of control parameters. In an embodiment, analyzing the set of control parameters using a natural language processing (NLP) approach comprises using a generative Artificial Intelligence (AI) model, for example, a conversation AI model to determine control parameters most relevant to a specific domain of interest to the user. For example, the control parameters may be chosen based on domain-specific aspects such as use case, simulation model, hardware, user behavior etc., identified based on interaction of the user with the generative AI model. In an implementation, NLP approaches may used to identify keywords, from user's interaction with the generative AI model, that are indicative of the domain of interest.

In another embodiment, a sensitivity analysis technique is used to compute the rankings based on sensitivity of the performance metric and the carbon footprint value to changes in each of the control parameters in the set of control parameters. In order to perform the sensitivity analysis, a Design-of-Experiments (DoE) (similar to the one in Table 1) corresponding to the set of control parameters affecting the carbon footprint associated with the software application, is determined. Further, a One-Factor-at-A-Time (OFAT) sensitivity analysis is performed on the DoE. Typically, the OFAT sensitivity analysis involves varying one control parameter at a time, to determine sensitivity of the performance metric and the carbon footprint to the varied control parameter. In the present implementation, step change in value of at least one of the control parameters may be used to determine sensitivity of the performance metric and the carbon footprint to the varied control parameter. For example, deviation of performance metric/carbon footprint (del y) is calculated as below:

$$del\ y = \frac{y_{new} - y_{original}}{y_{original}} \quad (3)$$

where,

y is the output or indicator. Here, y may be one of y1 - emissions (carbon footprint) and y2 - performance metric;

del y is the delta change in output y or normalized sensitivity value;

$y_{new}$ is the value of y for a new experiment;

$y_{original}$ is the value of y for the base experiment.

Further each of the control parameters may be ranked based on the respective del y. For example, the control parameter with highest value of del y may be assigned a rank of 1, and the control parameter with the next highest value of del y is assigned a rank of 2, and so on. Further, a set of control parameters is selected from the superset of control parameters based on the rankings of the control parameters. For example, the set of control parameters may include the top five highest ranking control parameters identified using the sensitivity analysis.

The sustainability management module 106 and/or the processor 104 is further configured for optimizing the set of control parameters identified, using a predetermined solver. In an embodiment, optimizing the set of control parameters includes generating a control parameter database based on the identified set of control parameters. The control parameter database comprises a Design of Experiments associated with the control parameters and corresponding values of carbon footprint and performance metric for the software application. Further, one or more objective functions are determined based on the determined control parameter database. The one or more objective functions is associated with at least one performance constraint and at least one sustainability constraint for the task. Further, at least one set of optimized control parameters is computed based on the generated objective functions using the solver. In an embodiment, the at least one set of optimized control parameters may be generated using DoE-based optimization. In DoE-based optimization, firstly, a DoE is generated as shown in Table 1 later. The data in the DoE is further analyzed to build a mathematical model based on relationships between the various control parameters and values of carbon footprint and performance metric. For example, the mathematical model may be based on polynomial models, response surface models, or other regression techniques may be employed to capture nonlinear relationships. Further, the mathematical model may be used for optimization, i.e., to determine the optimal set of values for the control parameters. The optimization based on the mathematical model may be performed using optimization techniques such as, gradient-based methods, genetic algorithms etc.

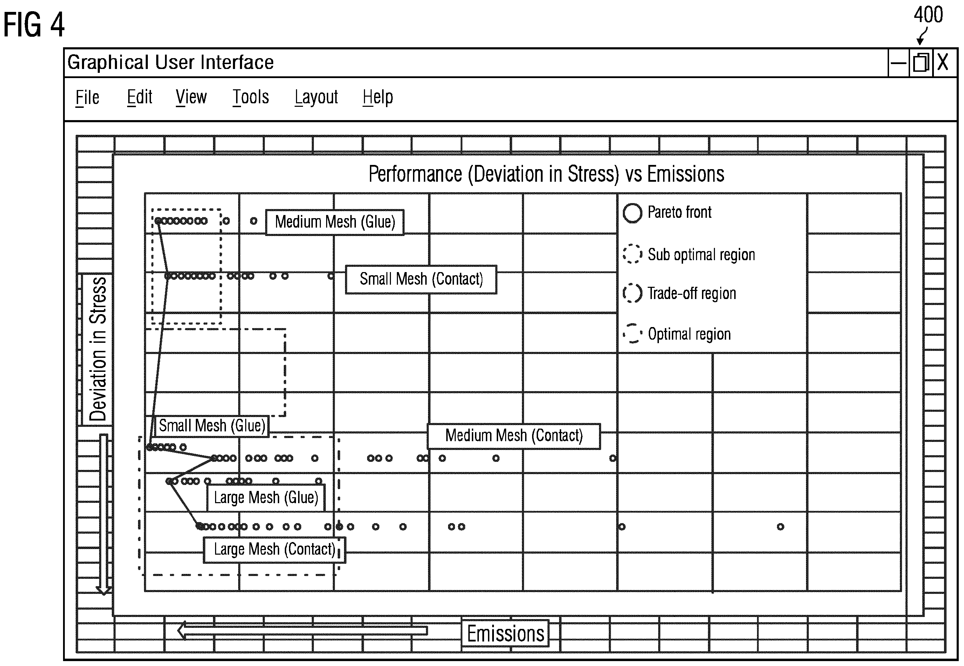

In another embodiment, the at least one set of optimized control parameters may be computed using graph-based optimization. In graph-based optimization, a trade-off curve is generated based on values of the performance metric and the carbon footprint present in the DoE. The trade-off curve may be further analyzed to identify optimal or sub-optimal operating regions to generate recommendations for the user. In an implementation, the recommendation may be generated based on manual selection of an operating point on the trade-off curve. FIG 4 shows an example of a Graphical User Interface 400 showing a Pareto front comprising a trade-off curve for a specific simulation task, in accordance with an embodiment of the present invention. The trade-off curve shows variation of a performance metric (stress) with carbon footprint (emission) for a software application. As shown, the Pareto curve includes a sub-optimal region, a trade-off region and an optimal region of operation of the software application. For example, the user may select a point in the trade-off curve that may suit their performance or sustainability requirement. Further, the control parameters corresponding to the selected point may be identified from the DoE and displayed to the user. The user may further choose to implement the displayed control parameters, for example, by selecting "Apply to task" option.

The Pareto front may be further analyzed by the sustainability management module, to provide human-interpretable recommendations. In the present example, a sample recommendation may be of the form "Large mesh analysis falls within the optimal region. Further, amongst large mesh analysis cases, it is observed that switching from glue analysis to contact analysis improves the performance metric by about 41%."

In yet another embodiment, the at least one set of optimized control parameters may be generated using model-based optimization. In model-based optimization, correlation analysis is performed for the control parameters, carbon footprint & performance metric in the DoE. The correlation analysis yield correlation indices corresponding to each pair of parameters (control parameters, carbon footprint & performance metric). Based on the correlation indices, a mathematical model is generated. Further, the mathematical model may be optimized using an optimization algorithm. In an embodiment, genetic algorithm-based optimization may be used to perform the optimization. In another embodiment, neural networkbased optimization may be used to perform the optimization.

In an embodiment, the sustainability management module 106 and/or the processor 104 is further configured for reconfiguring the software application based on the at least one set of optimized control parameters. In an embodiment, the set of optimized control parameters e.g., as a Pareto front, is displayed on the user interface as recommendations for the user to choose from. Further, the control parameters may be updated based on selections made by the user.

In an alternate embodiment, the sustainability management module and/or the processor 104 is configured to automatically detect the control parameters when the user is setting up a task. Further, the at least one set of optimized control parameters may be dynamically computed as described earlier and recommended to the user, for example, via a pop-up window. The user may further approve or ignore the at least one set of optimized control parameters. If the user approves, the at least one set of optimized control parameters may be implemented. Otherwise, the at least one set of optimized control parameters is not implemented. In addition to the at least one set of optimized control parameters, the recommendation may also include textual descriptions related to availability of hardware/software resources, reusable models, reusable codes and data, based on similarity of the task to an earlier (previously completed) task.

As mentioned above, the sustainability management platform 102 may comprise the above-described functionalities and may provide an interactive user interface of the sustainability management platform 102 which supports and enables the user to optimize carbon footprint associated with software applications.

Further, a computer-readable medium 160 which may comprise a computer program product 162 is shown in FIG 1, wherein the computer program product 162 may be encoded with executable instructions, that when executed, cause the computer system 100 or and/or the sustainability management platform 102 to carry out the described method.

FIG 2 shows a flowchart of a method 200 of measuring carbon footprint in accordance with an exemplary embodiment of the present invention. The method 200 is explained by taking the example of a 3D CAD modelling software that performs tasks based on simulation.

At step 205, execution of the utility application is initiated to monitor a data log file associated with the operating system. The execution of the utility application may be initiated manually by the user or automatically based on start of operation of a solver within the 3D CAD modelling software for a specific task defined by the user. In particular, the utility application starts monitoring when a solver for the specific task in the 3D CAD modelling software starts operation. Herein, monitoring refers to reading instantaneous energy consumption, as explained earlier, by the compute units of the hardware on which the 3D CAD modelling software is installed. The timestamp at which the utility application starts the monitoring may be called the "starting time". In an implementation, the utility application monitors the data log file based on reports generated by an Integrated Development Environment (IDE) scripting console. The IDE scripting console includes a script configured to extract the data log of the 3D CAD modelling software. Subsequently, when the solver finishes execution of the task, the utility application stops monitoring the data log file. The timestamp at which the utility application stops the monitoring may be called the "stopping time". Further, a total monitoring time is computed (for example, in seconds) based on a time duration between the starting time and the stopping time. Further based on the total monitoring time, and the instantaneous energy consumption data in the data log file, a cumulative energy consumed by the 3D CAD modelling software is estimated. Further, execution of the 3D CAD modelling software is terminated.

At step 210, the utility application starts a base run for the same duration as the total monitoring time computed at step 205. Further based on the total monitoring time, and the instantaneous energy consumption data in the data log file, a cumulative energy consumed without the 3D CAD modelling software is estimated.

At step 215, the carbon footprint associated with the 3D CAD modelling software is estimated. For example, if the cumulative energy consumption during execution of the 3D CAD modelling software is 1074.666 mWh, and the cumulative energy consumption during the base run is 571.6354 mWh, the net energy consumed by the 3D CAD modelling software during the total monitoring time is 1074.666 - 571.6354 = 503.03 mWh. The carbon footprint/carbon footprint is computed as:

$$\text{Carbon footprint} = \text{Net energy consumed} * \text{carbon intensity}$$

Here, the carbon intensity is predefined for a specific geographical region where the hardware resides. For example, the carbon intensity is 708.2 gCO2-eq/kWh for India. Therefore, the carbon footprint for net energy consumption of 503.03mWh is 0.35 gCO2eq. As explained earlier, the carbon footprint and the performance metric of the software application is governed by a plurality of control parameters such as number of nodes, analysis type, number of processor cores of the machine, etc.

Table 1 below show experimental results for carbon footprints and performance metric (in terms of Von mises stress values in mPA) when the number of nodes is varied.

| | Number of nodes | Carbon footprints (Sustainability indicator) | Von mises stress (mPA) (Performance indicator) |
|---|---|---|---|
| | 406863 | 1.147 | 19.53 |
| | 215115 | 0.405 | 22.26 |
| Difference: | 47% | 65% | - 13% |

In Table 1, a 47% reduction in number of nodes (i.e., with change of mesh size), the Von mises stress value increases by 13%, while the carbon footprint is reduced considerably by 65%. Similar experimental results may be obtained for variations in other control parameters too.

FIG 3 shows a flowchart of a method 300 of predicting carbon footprint from a software application, in accordance with an exemplary embodiment of the present invention. The method 300 is explained by taking the example of a 3D CAD modelling software. In the present embodiment, carbon footprint associated with a new task, is predicted before execution of the new task, based on carbon footprint values from previously completed tasks.

At step 305, the set of control parameters associated with the new task, say task A, is identified. For example, the set of control parameters is identified by reading the DAT file associated with task A. In another example, the user may manually enter the control parameters via the user interface. In the present example, the control parameters include control parameters 'x1-Country', 'x2-Location', 'x3-Analysis', 'x4-mesh size' and 'x5-cores'. Here, 'x1-Country' is a categorical variable that may take values 0, 1 or 2, depending on the country where the hardware is located. For example, 0 may indicate US, 1 may indicate Germany and 2 may indicate India. 'x2-Location' may indicate whether the task A is performed on-premise (value of 0), on cloud (value of 1) etc. 'x3-Analysis' may be a categorical variable indicative of a type of analysis, for example, structural analysis, thermal analysis etc. 'x4-mesh size' is a categorical variable that indicates whether the mesh size used for a CAD model during simulation is small mesh comprising approximately 200000 nodes (value of 0), medium mesh comprising approximately 200001 to 400000 nodes (value of 1) and large mesh comprising approximately 400001 to 600000 nodes (value of 2). 'x5-cores' indicates number of cores (processing units) used for the simulation and may take values 2, 4, 8, 10 and 12 depending on the number of used.

At step 310, two previously completed tasks, say tasks B1 & B2, closest to the task A are identified from a control parameter database based on the set of control parameters identified. In an embodiment, the control parameter database comprises, for example, a set of experiments generated using an automated Design of Experiments (DoE) tool. Table 1 shows an example of a section of a control parameter database generated using a DoE tool.

Table 1: Section of a control parameter database generated using a DoE tool

| Design of experiments | | | | | | | |
|---|---|---|---|---|---|---|---|
| | Inputs | | | | | Outputs | |
| Experiment number | X1-Country | X2-location | X3-analysis | X4-mesh size | X5-cores | Y1-emissions (gCO2 eq) | Y2-Perf (Avg stress, MPa) |
| 1 | 0 | 0 | 0 | 0 | 2 | 0.96 | 20.10 |
| 2 | 1 | 0 | 0 | 0 | 2 | 0.59 | 20.10 |
| 3 | 2 | 0 | 0 | 0 | 2 | 1.98 | 20.10 |
| 4 | 0 | 1 | 0 | 0 | 2 | 0.74 | 20.10 |
| 5 | 1 | 1 | 0 | 0 | 2 | 0.45 | 20.10 |
| 6 | 2 | 1 | 0 | 0 | 2 | 1.53 | 20.10 |
| 7 | 0 | 0 | 1 | 0 | 2 | 0.20 | 22.26 |
| 8 | 1 | 0 | 1 | 0 | 2 | 0.12 | 22.26 |
| 9 | 2 | 0 | 1 | 0 | 2 | 0.41 | 22.26 |
| 10 | 0 | 1 | 1 | 0 | 2 | 0.17 | 22.26 |
| 11 | 1 | 1 | 1 | 0 | 2 | 0.11 | 22.26 |
| 12 | 2 | 1 | 1 | 0 | 2 | 0.36 | 22.26 |
| 13 | 0 | 0 | 0 | 1 | 2 | 2.39 | 16.19 |
| 14 | 1 | 0 | 0 | 1 | 2 | 1.47 | 16.19 |
| 15 | 2 | 0 | 0 | 1 | 2 | 4.95 | 16.19 |
| 16 | 0 | 1 | 0 | 1 | 2 | 1.73 | 16.19 |
| 17 | 1 | 1 | 0 | 1 | 2 | 1.06 | 16.19 |

Each of the entries in the control parameter database corresponds to a previously completed task. As seen, the control parameter database includes values of the five control parameters (or inputs) 'x1-Country', 'x2-Location', 'x3-Analysis', 'x4-mesh size' and 'x5-cores', and corresponding output parameters 'y1-emissions' and 'y2-perf'. 'y1-emissions' and 'y2-perf' respectively indicate carbon footprint corresponding to a specific set of control parameters.

The two previously completed tasks (i.e., tasks B1 and B2) 'closest' to the task A, may be identified based on Euclidean distance computed for the set of control parameters corresponding to the task A and each of the previously completed tasks in the control parameter database. Further, the two previously completed tasks with shortest Euclidean distances from the new task are identified as the closest to the new task. In an embodiment, the tasks with different 'x5-core' values from task A may be eliminated before computing the Euclidean distances with the previously completed tasks. For example, if the task A has x5-core value as '2', only tasks with x5-core value '2' may be considered for computing the Euclidean distance from the control parameter database.

At step 315, the control parameter database is further used to perform multi-point interpolation to identify control parameters associated with the task A. The multi-point interpolation is performed based on the control parameters the tasks B1 and B2, to estimate the performance metric and the carbon footprint corresponding to task A. More specifically, weighted average of the performance metric corresponding to the tasks B1 and B2 is used to calculate the performance metric of the task A. Here, weights used in computing the weighted average correspond to the Euclidean distance determined for the tasks B1 and B2. Similarly, carbon footprint corresponding to task A is also estimated based on the weighted averages of carbon footprint corresponding to tasks B1 and B2.

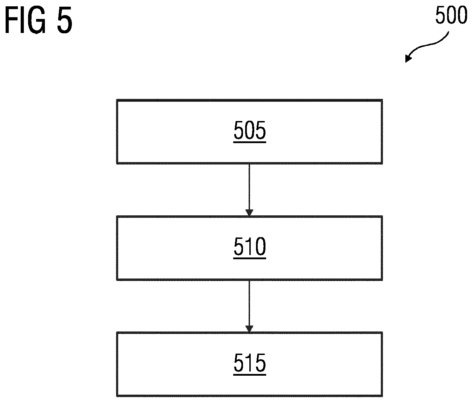

FIG 5 shows a flowchart of a method 500 of predicting carbon footprint associated with a software application, in accordance with another exemplary embodiment of the present invention. The method 500 is also explained by taking the example of a 3D CAD modelling software. In the present embodiment, transfer learning method is used to estimate the carbon footprint and the performance metric of a new task, say task C, based on a previously completed task, say task D. In this case, family databases may be created and stored for specific domains. For example, the family database may include carbon footprints mapped against performance metrics corresponding to different sets of control parameters, for a specific domain such as mechanical simulations. Similarly, family databases that map performance metrics and carbon footprints for other domains such as thermal simulations, aerodynamic simulations, fluid structure simulations etc. may also be created and stored in prior, within the storage unit.

At step 505, the set of control parameters associated with the task A is identified similar to step 305 of method 300. Furthermore, a family database corresponding to the new task may also be identified based on the type of simulation indicated in the control parameters. The family database comprises values of the control parameters 'x1-Country', 'x2-Location', 'x4-mesh size' and 'x5-cores', and corresponding output parameters 'y1-emissions' and 'y2-perf', for the specific type of analysis. In the present example, the family database may be identified based on value of 'x3-Analysis'.

At step 510, a previously completed task, (i.e., task B) closest to the new task is identified from the family database, based on the Euclidean distance as explained earlier with reference to step 310 of method 300.

At step 515, a transfer learning method is applied to compute carbon footprint and the performance metric corresponding to task A based on control parameters corresponding to task B. In the transfer learning method, a pretrained machine learning model is used to transfer 'knowledge' from task A to task B. In an embodiment, the machine learning model is trained based on control parameters, carbon footprint and performance metric associated with task A. For example, a training dataset used to train the machine learning model may include different sets of values corresponding to the control parameters, carbon footprint and performance metric. Consequently, the machine learning model may learn relationships between the control parameters, and the carbon footprint and/or performance metric for task A. Upon training, the machine learning model is employed to predict the carbon footprint and/or performance metric for task B, based on relationships learnt from task A.

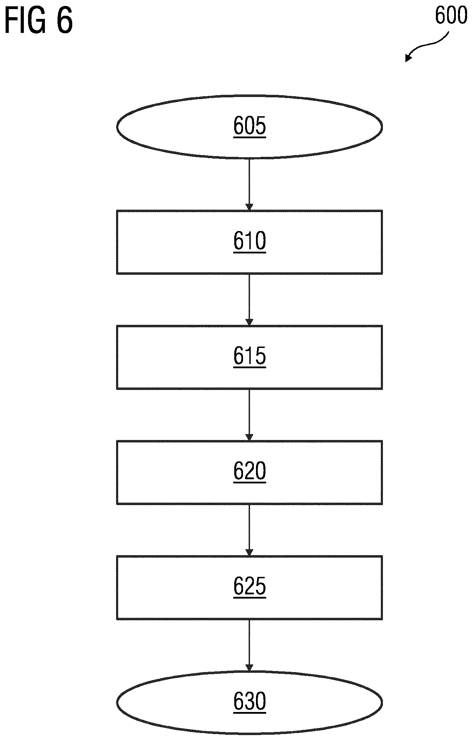

FIG 6 shows a flowchart of a method 600 for optimizing carbon footprint associated with a software application, in accordance with an embodiment of the present invention. The method may start at 605 and the methodology may comprise several method steps carried out through operation of at least one processor similar to the processor 104.

At step 610, an event associated with a software application is detected, wherein the event is indicative of a need for optimizing a carbon footprint associated with a task to be performed on the software application.

At step 615, a set of control parameters affecting the carbon footprint associated with the software application is identified.

At step 620, the set of control parameters is optimized using a predetermined solver. The optimized set of control parameters correspond to optimized carbon footprint associated with the software application.

At step 625, a notification indicative of an outcome of optimizing the set of control parameters is generated on a display device.

At 630, the methodology may end.

It should further be appreciated that the methodology 600 may comprise other acts and features discussed previously with respect to the computer-implemented method of optimizing carbon footprint associated with a software application.

For example, the method may further comprise the act of reconfiguring the software application based on the at least one set of optimized control parameters.

As discussed previously, acts associated with these methodologies (other than any described manual acts such as an act of manually making a selection through the input device 112) may be carried out by one or more processors. Such processor(s) may be included in one or more data processing systems, for example, that execute software components operative to cause these acts to be carried out by the one or more processors. In an example embodiment, such software components may comprise computer-executable instructions corresponding to a routine, a sub-routine, programs, applications, modules, libraries, a thread of execution, and/or the like. Further, it should be appreciated that software components may be written in and/or produced by software environments/languages/frameworks such as Java, Java-Script, Python, C, C#, C++ or any other software tool capable of producing components and graphical user interfaces configured to carry out the acts and features described herein.

The suggested approach offers several advantages over other approaches. E.g., the present invention optimizes carbon footprint of the software application for a specific task keeping performance of the software application within an acceptable range. In existing art, carbon footprint associated with software applications is estimated using Artificial Intelligence techniques, that require significant computational resources. However, in the present invention, the carbon footprint is measured using pre-installed utility software or predicted based on existing control parameter databases, thereby eliminating the need for computation-intensive AI-based techniques.

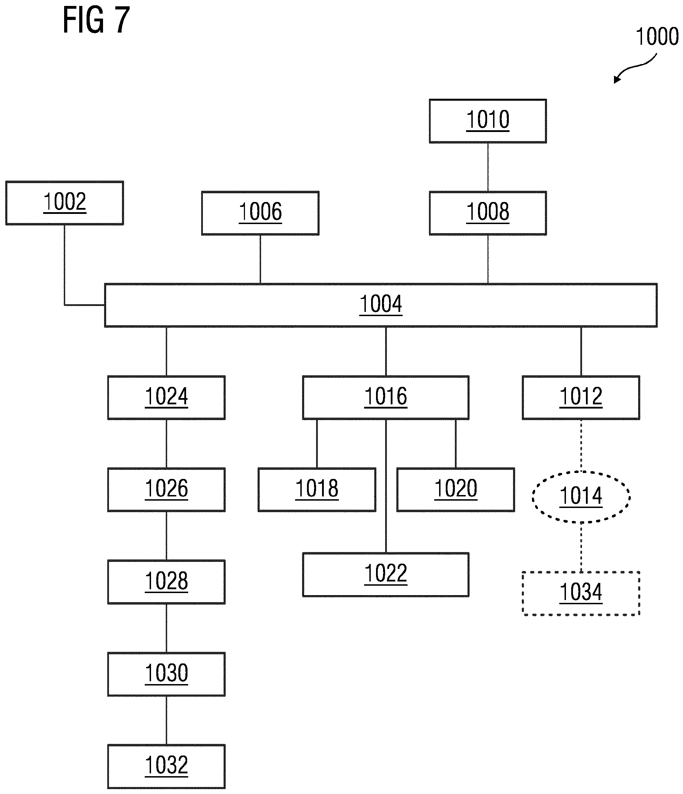

FIG 7 illustrates a block diagram of a data processing system 1000 (also referred to as a computer system) in which an embodiment can be implemented, for example, as a portion of a product system, and/or other system operatively configured by software or otherwise to perform the processes as described herein. The data processing system 1000 may include, for example, the sustainability management platform 102 and/or the computer system or data processing system 100 mentioned above. The data processing system depicted includes at least one processor 1002 (e.g., a CPU) that may be connected to one or more bridges/controllers/buses 1004 (e.g., a north bridge, a south bridge). One of the buses 1004, for example, may include one or more I/O buses such as a PCI Express bus. Also connected to various buses in the depicted example may include a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1012 (Ethernet controllers, Wi-Fi controllers, cellular controllers) operative to connect to a local area network (LAN), Wide Area Network (WAN), a cellular network, and/or other wired or wireless networks 1014 or communication equipment.

Further components connected to various buses may include one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) including input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that includes a touch screen that serves as both an input device and a display device. Further, it should be appreciated that some input devices (such as a laptop) may include a plurality of different types of input devices (e.g., touch screen, touch pad, keyboard). Also, it should be appreciated that other peripheral hardware 1022 connected to the I/O controllers 1016 may include any type of device, machine, or component that is configured to communicate with a data processing system.

Additional components connected to various busses may include one or more storage controllers 1024 (e.g., SATA). A storage controller may be connected to a storage device 1026 such as one or more storage drives and/or any associated removable media, which can be any suitable non-transitory machine usable or machinereadable storage medium. Examples include nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system 1000 in accordance with an embodiment of the present disclosure may include an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may include Microsoft Windows, Linux, UNIX, iOS, and Android operating systems. Also, examples of data stores include data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, including the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system 1000 may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor 104 described herein may be located in a server that is remote from the display and input devices described herein. In such an example, the described display device and input device may be included in a client device that communicates with the server (and/or a virtual machine executing on the server) through a wired or wireless network (which may include the Internet). In some embodiments, such a client device, for example, may execute a remote desktop application or may correspond to a portal device that carries out a remote desktop protocol with the server to send inputs from an input device to the server and receive visual information from the server to display through a display device. Examples of such remote desktop protocols include Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein, the term 'processor' corresponds to any electronic device that is configured via hardware circuits, software, and/or firmware to process data. For example, processors described herein may correspond to one or more (or a combination) microprocessors, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system 1000 as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "include" and "comprise," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

Although an exemplary embodiment of the present disclosure has been described in detail, those skilled in the art will understand that various changes, substitutions, variations, and improvements disclosed herein may be made without departing from the scope of the disclosure in its broadest form.

None of the description in the present patent document should be read as implying that any particular element, step, act, or function is an essential element, which must be included in the claim scope: the scope of patented subject matter is defined only by the allowed claims.

LIST OF REFERENCE NUMERALS

| | |
|---|---|
| 100 | data processing system |
| 102 | sustainability management platform |
| 104 | processor |
| 106 | sustainability management module |
| 108 | memory |
| 112 | input device |
| 114 | display device |
| 116 | graphical user interface (GUI) |
| 118 | first UI |
| 120 | second UI |
| 160 | computer-readable medium |
| 162 | computer program product |
| 400 | Graphical User Interface showing a Pareto front comprising a trade-off curve for a specific simulation task |
| 1000 | data processing system |
| 1002 | processor |
| 1004 | bridges/controllers/buses |
| 1006 | memory |
| 1008 | graphics controller |
| 1010 | display devices |
| 1012 | communication controllers |
| 1014 | networks |
| 1016 | I/O controllers |
| 1018 | input devices |
| 1020 | output devices |
| 1022 | peripheral hardware |
| 1024 | storage controllers |
| 1026 | storage device |
| 1028 | operating system |
| 1030 | software/firmware |
| 1032 | data stores |

1034    server

**Claims**

1.  A computer-implemented method for optimizing carbon footprint associated with a software application, the method comprising:

    detecting, by a processor (104), an event associated with a software application, wherein the event is indicative of a need for optimizing carbon footprint associated with a task to be performed on the software application;
    identifying a set of control parameters affecting the carbon footprint and a performance metric associated with the software application;
    optimizing the set of control parameters identified, using a predetermined solver, wherein the optimized set of control parameters correspond to optimized carbon footprint associated with the software application; and
    generating a notification indicative of an outcome of optimizing the set of control parameters on a display device (114).

2.  The method according to claim 1, wherein detecting the event associated with the software application comprises: receiving a request from a source, for optimizing the carbon footprint associated with the task.

3.  The method according to claim 1, wherein detecting the event associated with the software application comprises: determining that at least one of an estimated carbon footprint and a performance metric associated with the task fails to meet a predefined constraint.

4.  The method according to claims 1 and 3, wherein the estimated carbon footprint is at least one of an actual carbon footprint value and a predicted carbon footprint value associated with the task.

5.  The method according to claims 1 and 4, wherein the actual carbon footprint value is estimated by:

    measuring instantaneous energy consumption associated with the software application, by using a utility software; and
    computing the actual carbon footprint value associated with the software application based on values of the instantaneous energy consumption measured by the utility software over a predefined time interval.

6.  The method according to claims 1 and 4, wherein the predicted carbon footprint value is estimated by:

    comparing the task to one or more previously completed tasks performed by the software application, based on the set of control parameters, wherein carbon footprints associated with the previously completed tasks are readily available;
    determining that at least one previously completed task is similar to the task; and
    predicting carbon footprint associated with the task, based on the previously completed task.

7.  The method according to claims 1 and 6, wherein the carbon footprint and the performance metric associated with the task is computed from the previously completed task using transfer learning method.

8.  The method according to claims 1 and 6, wherein the carbon footprint and the performance metric associated with the task is computed from at least two of the previously completed tasks using multi-point interpolation.

9.  The method according to claim 1, wherein identifying the set of control parameters affecting the carbon footprint associated with the software application, comprises:

    analyzing a superset of control parameters associated with the task to be performed by the software application, to compute rankings associated with each control parameter in the set of control parameters; and
    selecting the set of control parameters from the superset of control parameters based on the rankings of the control parameters.

10. The method according to claims 1 and 9, wherein optimizing the set of control parameters using the predetermined solver comprises:

generating a control parameter database based on the identified set of control parameters, wherein the control parameter database comprises a Design of Experiments associated with the control parameters and corresponding values of carbon footprint and performance metric for the software application;

determining one or more objective functions based on the determined control parameter database, wherein the one or more objective functions is associated with at least one performance constraint and at least one sustainability constraint for the task; and

computing at least one set of optimized control parameters based on the generated objective functions using the solver.

11. The method according to claim 1, further comprising:

reconfiguring the software application based on the at least one set of optimized control parameters.

12. A computer system (100) arranged and configured to execute the steps of the computer-implemented method according to any one of the preceding claims 1 to 11.

13. A computer program product (162), comprising computer program code which, when executed by a computer system (100), cause the computer system (100) to carry out the method of one of the claims 1 to 11.

14. A computer-readable medium (160) comprising a computer program product (162) comprising computer program code which, when executed by a computer system (100), cause the computer system (100) to carry out the method of one of the claims 1 to 11.

FIG 1

100

EP 4 530 963 A1

102

124

122   126   128

104

108

106

112

114

116

118   120

160

162

FIG 2

200

FIG 3

300

305

310

315

# FIG 4

400

Graphical User Interface    — ☐ X

File    Edit    View    Tools    Layout    Help

Performance (Deviation in Stress) vs Emissions

Deviation in Stress

Emissions

Medium Mesh (Glue)

Small Mesh (Contact)

Small Mesh (Glue)

Medium Mesh (Contact)

Large Mesh (Glue)

Large Mesh (Contact)

○ Pareto front

⟨ ⟩ Sub optimal region

( ) Trade-off region

⟨ ⟩ Optimal region

EP 4 530 963 A1

FIG 5

500

```
┌─────────────────────────┐
│           505           │
└─────────────────────────┘
             │
             ▼
┌─────────────────────────┐
│           510           │
└─────────────────────────┘
             │
             ▼
┌─────────────────────────┐
│           515           │
└─────────────────────────┘
```

**FIG 6**

600

605

610

615

620

625

630

FIG 7

1000

```
                                              ┌──────────┐
                                              │   1010   │
                                              └────┬─────┘
                                                   │
┌──────────┐        ┌──────────┐             ┌────┴─────┐
│   1002   │        │   1006   │             │   1008   │
└────┬─────┘        └────┬─────┘             └────┬─────┘
     │                   │                        │
┌────┴───────────────────┴────────────────────────┴──────┐
│                        1004                             │
└──┬──────────────────────────┬───────────────────┬──────┘
   │                          │                   │
┌──┴───────┐          ┌───────┴──────┐      ┌─────┴────┐
│   1024   │          │    1016      │      │   1012   │
└──┬───────┘          └──┬────────┬──┘      └────┬─────┘
   │                    │        │              ┆
┌──┴───────┐       ┌────┴───┐ ┌──┴─────┐    ⟨  1014  ⟩
│   1026   │       │  1018  │ │  1020  │       ┆
└──┬───────┘       └────────┘ └────────┘    ┌──┆──────┐
   │                    │                   │  1034   │
┌──┴───────┐       ┌────┴───┐               └─────────┘
│   1028   │       │  1022  │
└──┬───────┘       └────────┘
   │
┌──┴───────┐
│   1030   │
└──┬───────┘
   │
┌──┴───────┐
│   1032   │
└──────────┘
```

Europäisches
Patentamt

European
Patent Office

Office européen
des brevets

# EUROPEAN SEARCH REPORT

Application Number

EP 23 20 0912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/281846 A1 (ROSE JOHN F [AU]) 12 November 2009 (2009-11-12) * paragraph [0017] – paragraph [0023]; claims 1-3,8,11,14,17 * * paragraph [0044] * * paragraph [0049] – paragraph [0051] * | 1-14 | INV. G06Q50/06 H04L67/12 |
| X | US 2022/398095 A1 (WELDEMARIAM KOMMINIST [CA] ET AL) 15 December 2022 (2022-12-15) * paragraph [0012] – paragraph [0027]; claims 1-9; figure 2 * | 1-14 | |
| X | US 2022/108252 A1 (NARASIMHAN ANAND [GB] ET AL) 7 April 2022 (2022-04-07) * paragraph [0022] – paragraph [0084]; claims 1-19 * | 1-14 | |
| X | US 11 307 971 B1 (WELDEMARIAM KOMMINIST [CA] ET AL) 19 April 2022 (2022-04-19) * column 5 – column 10; figures 2,3,5 * | 1-14 | |
| A | CN 115 730 679 A (SIEMENS AG) 3 March 2023 (2023-03-03) * claim 1 * | 1-14 | TECHNICAL FIELDS SEARCHED (IPC) G06Q H04L |
| A | KANNAN SUDARSUN ET AL: "Towards Application Centric Carbon Emission Management", PROCEEDINGS OF THE 2001 INTERNATIONAL ACM SIGGROUP CONFERENCE ON SUPPORTING GROUP WORK, ACM, NEW YORK, NY, US, 9 July 2023 (2023-07-09), pages 1-7, XP059148276, DOI: 10.1145/3604930.3605725 ISBN: 978-1-58113-294-6 * page 1 * | 1-14 | |

The present search report has been drawn up for all claims

| Place of search | Date of completion of the search | Examiner |
|---|---|---|
| Munich | 18 January 2024 | Lavin Liermo, Jesus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 23 20 0912

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2024

| Patent document cited in search report | | | Publication date | Patent family member(s) | | | Publication date |
|---|---|---|---|---|---|---|---|
| US 2009281846 | A1 | | 12-11-2009 | EP | 2116967 | A1 | 11-11-2009 |
| | | | | US | 2009281846 | A1 | 12-11-2009 |
| US 2022398095 | A1 | | 15-12-2022 | NONE | | | |
| US 2022108252 | A1 | | 07-04-2022 | US | 2022108252 | A1 | 07-04-2022 |
| | | | | WO | 2022072026 | A1 | 07-04-2022 |
| US 11307971 | B1 | | 19-04-2022 | NONE | | | |
| CN 115730679 | A | | 03-03-2023 | CN | 115730679 | A | 03-03-2023 |
| | | | | EP | 4141669 | A1 | 01-03-2023 |
| | | | | US | 2023061681 | A1 | 02-03-2023 |

EPO FORM P0459

For more details about this annex : see Official Journal of the European Patent Office, No. 12/82